# FASCICULE DE BREVET EUROPEEN

(11) **EP 0 688 004 B1**
(45) Date de publication et mention de la délivrance du brevet: **20.10.1999**
(21) Numéro de dépôt: 95401281.1
(22) Date de dépôt: 01.06.1995
(51) Int. Cl.: G08G 5/04, G01C 21/00

(54) **Dispositif d'évitement de collisions pour aéronef notamment avec le sol à bilan énergétique réduit**
Gerät zur Vermeidung von Flugzeugkollisionen insbesondere mit dem Boden, mit reduzierter Energiebilanz
Apparatus for aircraft collision avoidance, particularly with the ground, with reduced energy balance

(30) Priorité: 14.06.1994 FR 9407247
(43) Date de publication de la demande: 20.12.1995
(73) Titulaire: SEXTANT AVIONIQUE, 92360 Meudon La Forêt (FR)
(72) Inventeur: Denoize, Xavier, F-92402 Courbevoie Cedex (FR); Faivre, François, F-92402 Courbevoie Cedex (FR); Servat, Thierry, F-92402 Courbevoie Cedex (FR)
(74) Mandataire: Benoit, Monique

(56) Documents cités:
- EP-A- 0 565 399
- EP-A- 0 597 760
- WO-A-85/03566
- WO-A-92/21077
- US-A- 5 111 400

## Description

La présente invention concerne un dispositif d'évitement de collisions pour aéronef notamment avec le sol, à bilan énergétique réduit. Elle s'applique notamment à des avions de lignes. Plus généralement, elle s'applique à tous aéronefs amenés au cours de leur mission à se rapprocher trop près du sol, dans le cas de proximité de montagnes par exemple, ou à évoluer dans des secteurs de l'espace aérien dans lesquels ils représentent un danger ou sont eux-mêmes en danger, dans des zones d'accès interdit par exemple, l'évitement étant réalisé sans une trop grande consommation d'énergie.

Des dispositifs d'évitement de collision entre le sol et des aéronefs sont connus. Ces dispositifs se caractérisent principalement par l'utilisation de radioaltimètres, de calculateurs donnant la hauteur barométrique à partir de mesures de pression et de température, et de moyens de navigation tels qu'une centrale à inertie ou un système de gestion du vol. Le principe de ces dispositifs réside dans l'exploitation d'une hauteur altimétrique, prise par rapport au sol, et dans l'exploitation des variations de la hauteur radioaltimétrique ou barométrique. Cette dernière est notamment utilisée à cause de sa plus grande disponibilité pour les hauteurs importantes par rapport à la variation de hauteur altimétrique. Ces distances par rapport au sol sont comparées à des valeurs de seuil qui dépendent elles-mêmes des valeurs de hauteurs et de la configuration de l'avion, suivant que son train, ses volets ou ses becs sont sortis par exemple. Lorsque les paramètres mesurés, hauteurs et variations de hauteurs en fonction du temps notamment, dépassent les valeurs de seuils, une alarme est émise à destination de l'équipage. Cependant, de tels dispositifs présentent l'inconvénient de donner des mesures trop tardives par rapport à l'évolution de l'avion donc de générer des alarmes souvent trop tardives empêchant les équipages de réagir à temps et susceptibles en conséquence de ne pas empêcher des collisions. Ce fait peut notamment se produire en cas de brusque remontée du relief, quand l'avion se dirige vers le flanc d'une montagne abrupte par exemple. Un autre inconvénient des dispositifs connus est qu'ils génèrent des alarmes injustifiées, encore appelées fausses alarmes. Celles-ci peuvent notamment intervenir quand les avions survolent des montagnes de faible altitude avec une bonne hauteur de sécurité mais où les remontées de relief par exemple, pourtant sans danger, provoquent ces fausses alarmes. Celles-ci diminuent gravement la crédibilité de ces dispositifs anticollision.

Des améliorations ont été apportées à ces derniers, notamment en introduisant des bases de données qui permettent de moduler la valeur des seuils à prendre en compte en fonction de la position géographique des avions. Ces améliorations sont susceptibles de diminuer les fausses alarmes. Cependant, elles nécessitent des bases de données adaptées à chaque type de terrain. Dans la continuité de cette dernière solution, il est envisageable de disposer d'un modèle numérique de terrain qui permettrait de connaître en permanence en fonction de sa position, la nature du relief en avant d'un avion. Néanmoins, l'utilisation d'un tel modèle nécessite une base de données décrivant le relief de façon suffisamment précise, donc demandant des mémoires de grande taille. A cet inconvénient, s'ajoute la nécessité de procédures d'échanges et de mises à jour d'une telle base de données, ce qui complique son utilisation. Le grand nombre d'informations stockées implique par ailleurs des risques d'erreurs non négligeables, nuisibles à la fiabilité du système.

EP-A-0 597 760 divulgue un dispositif selon la partie pré-caractérisante de la revendication 1.

Un inconvénient présenté par ce dispositif d'évitement connu est la grande consommation d'énergie qu'il nécessite pour la correction des trajectoires, notamment dans le cas d'une brusque remontée de trajectoire.

Le but de l'invention est de pallier l'inconvénient précité, notamment un meilleur bilan énergétique.

A cet effet, l'invention a pour objet un dispositif d'évitement de collisions pour un aéronef caractérisé par des moyens de détermination du bilan d'énergie de chacune des trajectoires calculées.

D'autres caractéristiques et avantages de l'invention apparaîtront au cours de la description qui suit faite en regard des dessins annexés qui représentent:
- la figure 1, une position d'un aéronef 1 par rapport à un terrain susceptible de constituer un obstacle ;
- la figure 2, un synoptique d'un dispositif selon l'invention ;
- la figure 3, des exemples de trajectoires d'évitement calculées par le dispositif selon l'invention ;
- la figure 4, un exemple de réalisation possible d'un dispositif selon l'invention ;
- la figure 5, un exemple de réalisation d'alarme visuelle selon l'invention.

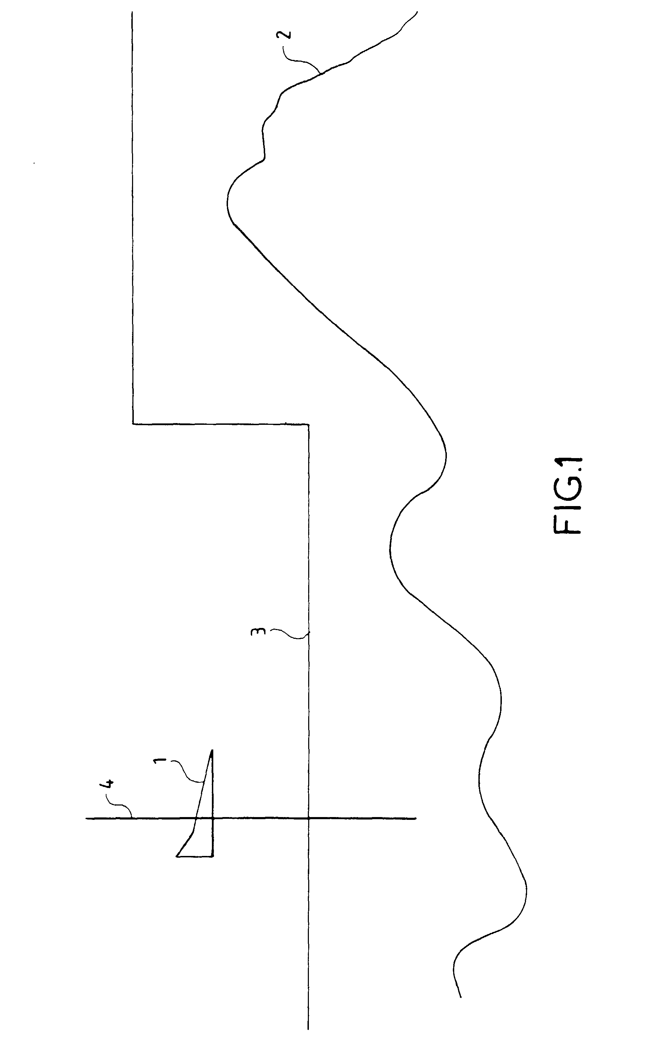

La figure 1 illustre une position d'un aéronef 1 par rapport à un terrain 2 susceptible de constituer un obstacle. Selon l'invention une description des altitudes de sécurité de l'aéronef 1 est mémorisée. Ces altitudes sont par exemple définies par rapport au relief du terrain 2, par rapport à des zones d'espace aérien interdites ou par rapport à des procédures de vol ou d'atterrissage. En fonction de la localisation géographique de l'aéronef et en fonction de la description des altitudes de sécurité, un plancher aérien 3 est construit autour de la verticale 4 de l'aéronef, le plancher constituant en fait une limite aérienne pour l'aéronef en dessous de laquelle un risque de collision est possible. Si la localisation géographique de l'aéronef est une approche de terrain d'atterrissage, la description des altitudes de sécurité conduit à un type de plancher prenant en compte notamment les procédures d'atterrissage. Si cette localisation est dans une région montagneuse, le relief est pris en considération. Le plancher 3 n'épouse pas les accidents de relief du terrain 2 mais est défini par exemple par une altitude globale. Cette altitude globale est cependant définie localement. En cas de remontée du terrain 2, le plancher 3 devient défini par une nouvelle altitude globale supérieure au point culminant du relief. En cas d'atterrissage, cette altitude globale est définie successivement par les différentes altitudes minimales d'approche ainsi que par les couloirs d'approche par exemple.

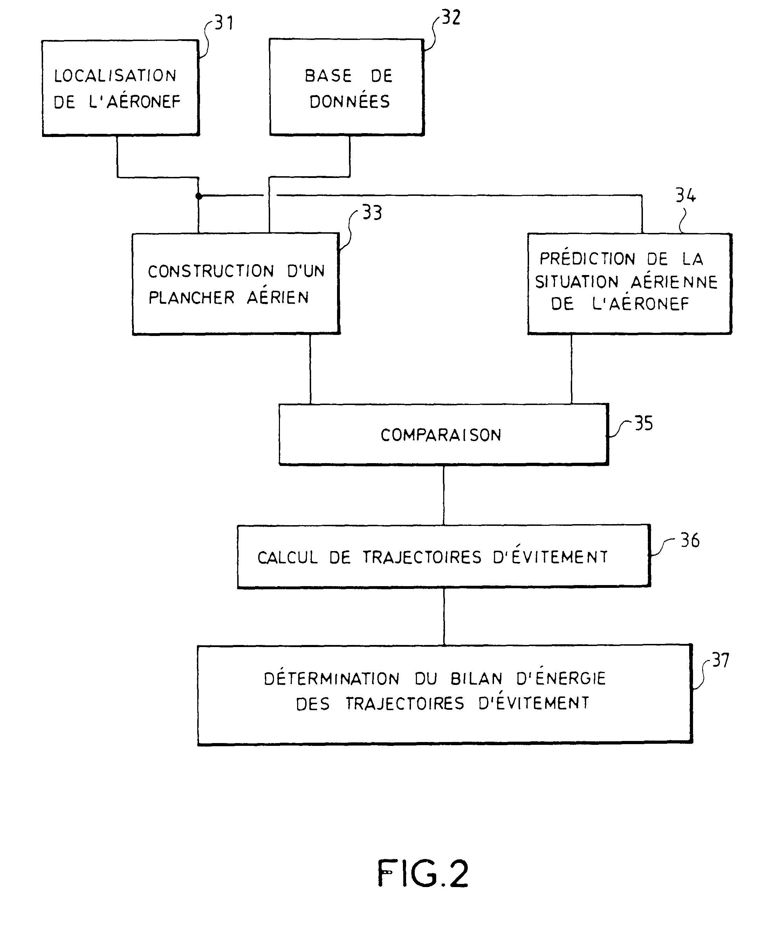

La figure 2 présente un synoptique d'un dispositif selon l'invention. Ce dispositif comprend au moins des moyens de localisation 31 de l'aéronef qui le contient et une base de données 32 mémorisant notamment une description d'altitudes de sécurités. Des moyens de construction, par calcul, d'un plancher aérien autour de la verticale de l'aéronef 33 sont reliés aux moyens de localisation 31 et à la base de données 32. A partir de la localisation géographique de l'aéronef définie par les moyens de localisation 31 et des altitudes de sécurité fonction de la géographie des régions survolées mémorisées par la base de données 32, les moyens de construction définissent un plancher aérien en dessous duquel l'aéronef risque d'entrer en collision avec le sol ou n'est plus en sécurité. Ce plancher aérien est par exemple du type du plancher 3 de la figure 1. Le plancher 3 est par exemple calculé tout au long du vol de l'aéronef.

Des moyens de prédiction de la situation aérienne de l'aéronef 34, sont reliés aux moyens de localisation 31. Ces moyens de prédiction 34 évaluent la situation aérienne de l'aéronef entre un premier instant to donné, qui est par exemple celui de construction du plancher aérien 3 autour de l'aéronef et un deuxième instant donné to + Δt. Entre chaque construction de planchers, plusieurs prédictions de situations de l'aéronef peuvent par exemple être réalisées. Une prédiction est réalisée notamment à partir de la situation connue de l'aéronef, localisation géographique et position verticale, au premier instant donné et de son vecteur vitesse à cet instant.

Des moyens de comparaison 35 sont reliés aux moyens de construction 33 et aux moyens de prédiction 34. Ces moyens de comparaison 35 comparent la situation prédite de l'aéronef par rapport au plancher aérien construit au premier instant to. Si la situation prédite de l'aéronef est au dessus du plancher aérien, il est jugé être en sécurité.

Dans le cas contraire, un risque de collision est possible.

Des moyens 36 de calcul de trajectoires d'évitement permettent alors de déterminer plusieurs trajectoires possibles pour l'aéronef 1. Ces trajectoires sont notamment fonction des capacités mécaniques de vol de l'aéronef.

Des moyens 37 de détermination du bilan d'énergie des trajectoires d'évitement permettent notamment à l'aéronef 1 d'éviter un obstacle en choisissant la trajectoire d'évitement consommant le moins d'énergie.

Le bilan énergétique de chacune des trajectoires calculées est par exemple fonction de paramètres tels que le changement d'altitude de la trajectoire, ou encore son ou ses rayons de courbures connaissant notamment l'énergie consommée par l'aéronef en fonction de ces paramètres, ces données étant caractéristiques de l'aéronef porteur.

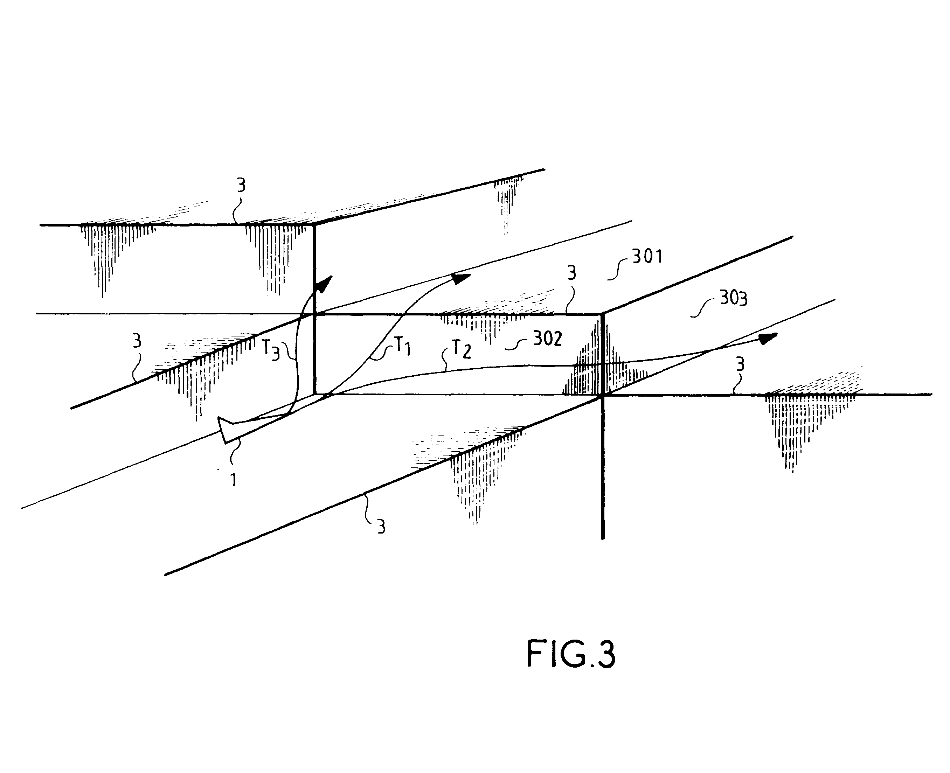

La figure 3 illustre un exemple où trois trajectoires d'évitement T1, T2, T3 ont été définies par les moyens de calcul 36, en fonction notamment d'un plancher de sécurité 3 au voisinage de l'aéronef 1 à plusieurs niveaux. Les moyens de calcul 36 établissent différentes trajectoires type d'évitement permettant de rejoindre une position située au dessus des planchers de sécurité avec une intersection minimale, si possible nulle, avec ces derniers. Pour chacune de ces trajectoires T1, T2, T3, les moyens de détermination 37 établissent le bilan d'énergie nécessaire, en prenant bien en compte notamment l'ensemble des manoeuvres à effectuer. Seules les trajectoires compatibles des possibilités énergétiques de l'aéronef sont prises en compte. Les moyens 37 de détermination du bilan d'énergie des trajectoires d'évitement peuvent par exemple transmettre des données vers des moyens de visualisation ou de sonorisation pour établir un message visuel ou sonore permettant d'effectuer la manoeuvre optimale au sens du bilan d'énergie. Dans un mode de réalisation, seule l'indication de la trajectoire d'évitement la moins énergétique est par exemple transmise. Dans un autre mode de réalisation, plusieurs trajectoires peuvent être proposées au pilote avec l'indication du bilan énergétique de chacune.

Dans l'exemple de la figure 3, les moyens de prédiction de la situation de l'aéronef 1 lui prédisant le passage sous un niveau 301 du plancher de sécurité 3, trois trajectoires d'évitement T1, T2, T3 sont proposées par les moyens 36 de calcul de trajectoires d'évitement. Deux trajectoires T1, T3 évitent l'obstacle en passant au dessus du niveau 301 du plancher 3. Une trajectoire T2 ne passe pas au dessus de ce niveau mais effectue un contournement latéral des plans verticaux 302, 303 le délimitant, effectuant par là même un contournement latéral de l'obstacle ayant généré le niveau 301 du plancher de sécurité 3. D'un point de vue du bilan énergétique, cette dernière trajectoire d'évitement T2 peut être préférée aux autres parce que consommant moins d'énergie que les précédentes qui nécessitent une remontée de l'aéronef 1. D'autres paramètres que la remontée d'altitude peuvent conditionner le bilan énergique, notamment les paramètres concernant le changement de trajectoire de l'aéronef, un brusque changement de trajectoire consommant par exemple plus d'énergie qu'un changement à faible rayon de courbure. Il s'ensuit que le bilan d'énergie des différentes trajectoires d'évitement calculées suite à l'apparition d'un obstacle dépendent de plusieurs paramètres liés notamment aux situations relatives de l'aéronef et de l'obstacle, ainsi qu'au vecteur vitesse de l'aéronef.

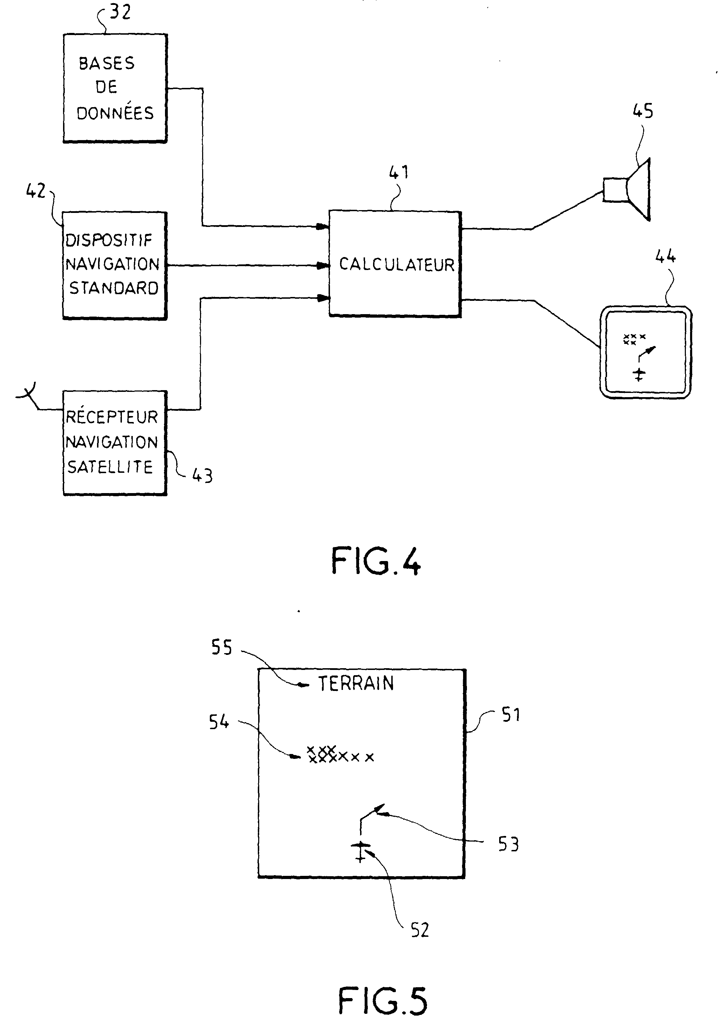

La figure 4 présente un mode de réalisation possible d'un dispositif selon l'invention. Un calculateur 41 comprend par exemple les moyens 33 de construction d'un plancher aérien, les moyens 34 de prédiction de la situation aérienne de l'aéronef, les moyens de comparaison 35, les moyens 36 de calcul de trajectoires d'évitement et les moyens 37 de détermination du bilan d'énergie des trajectoires d'évitement. Ce calculateur 41 est relié à la base de données 32. Cette dernière contient notamment l'ensemble des informations permettant de définir les planchers relatifs au vol de l'aéronef, c'est à dire une description des altitudes de sécurité à respecter, fonction notamment des reliefs survolés, des zones aériennes interdites et des procédures de vol, d'atterrissage ou de décollage. A cet effet, elle contient par exemple une description des balises de navigation relatives à chaque aéroport ainsi que leurs positions géographiques, une description des procédures d'approche pour chaque aéroport et une description des hauteurs minimales de sécurité à respecter lorsqu'aucun aéroport n'est à proximité ou lorsque l'aéronef est en croisière. La base de données 32 peut contenir par exemple une description des aéroports du monde entier.

La description des procédures d'approche est par exemple constituée d'un certain nombre de segments rectilignes ou en forme d'arc pour lesquels sont donnés le point initial et le point final en position absolue, c'est à dire en latitude et longitude, ou en position relative par rapport à une balise de navigation, ainsi que les hauteurs de sécurité à respecter au passage entre ces deux points.

La description des hauteurs minimales de sécurité peut être obtenue en prenant par exemple un carroyage correspondant aux lignes des parallèles et des méridiens de la surface terrestre et en affectant à chaque carré une valeur de hauteur minimale de sécurité.

Une autre solution d'organisation de la base de données 32 consiste à ce qu'elle mémorise toutes les altitudes de sécurités au lieu des descriptions précitées, néanmoins une telle organisation demande notamment plus de place en mémoire. En revanche, elle peut avoir l'avantage de réduire des temps de calcul ou de construction de planchers.

Les moyens de localisation de l'aéronef sont par exemple constitués d'un dispositif de navigation standard 42, et d'un récepteur de navigation satellite 43, ce dernier permettant notamment l'amélioration de la localisation.

La prédiction de la situation aérienne de l'aéronef est réalisée par le calculateur 41 à partir du vecteur vitesse de l'aéronef et de sa position. Si la comparaison de la situation de l'aéronef avec la plancher 3 montre que cette situation est en dessous de ce plancher, le calculateur 41 calcule une ou plusieurs trajectoires d'évitement en fonction des capacités de l'aéronef. Ces capacités comprennent notamment les capacités à cabrer et à virer. Le calcul des trajectoires d'évitement prend notamment en compte un temps de réaction et a pour objectif d'éviter que l'aéronef passe au dessous du plancher de sécurité 3.

Le calculateur 41 ayant établit les bilans d'énergie de chacune des trajectoires il transmet par exemple la trajectoire nécessitant le moins d'énergie à des moyens de visualisation 44 pour effectuer une alarme visuelle ou à des moyens sonores 45 pour effectuer une alarme sonore.

La figure 5 présente un exemple d'alarme visuelle selon l'invention. Cette alarme est par exemple réalisée par un écran 51 relié par des moyens d'interface non représentés au calculateur 41. Cet écran 51 produit un symbole 52 représentant la position de l'aéronef 1, une flèche 53 indiquant la direction de la trajectoire à suivre pour éviter l'obstacle qui est par exemple représenté par des croix 54, un message 55 indiquant par exemple la nature de l'obstacle.

Les moyens d'alarmes sonores 45 peuvent par exemple reprendre les informations délivrées par les moyens d'alarme visuels, notamment la nature de l'obstacle et la direction à prendre pour l'éviter.

Le dispositif selon l'invention permet de créer des trajectoires d'évitement qui ne se situent pas obligatoirement dans le plan vertical. Or, il se trouve que d'une part ces manoeuvres ne sont pas nécessairement les plus adaptées pour rejoindre au plus vite une situation sûre par rapport au terrain, d'autre part cette manoeuvre dans le plan vertical peut lors de l'approche de certains aéroports, constituer un danger accru de collision avec le sol. Des dispositifs ne prédisant que des manoeuvres verticales comportent par ailleurs un taux relativement élevé de fausses alarmes lors de certaines opérations de décollage ou d'approche d'atterrissage qui comportent des virages dans des volumes de sécurité très restreints, par exemple les aéroports situés à proximité de montagnes.

Le dispositif selon l'invention, par les manoeuvres latérales qu'il calcule, permet de surmonter ces inconvénients.

Le plancher 3 défini autour de la verticale de l'aéronef 1 a par exemple un nombre fini de niveaux d'altitudes comme le montrent les figures 1 et 3. Il est possible d'envisager des planchers d'altitudes continûment variables. De tels planchers, permettent notamment au dispositif selon l'invention d'être opérationnel pratiquement jusqu'à l'atterrissage de l'aéronef sur le sol.

## Revendications

1. Dispositif d'évitement de collisions pour un aéronef (1) comprenant au moins :
- des moyens de localisation géographique (31, 42, 43) de l'aéronef (1) ;
- une base de données (32) contenant une description d'altitudes de sécurité fonctions au moins des lieux géographiques ;
- des moyens (33, 41) de construction par calcul d'un plancher (3) autour de la verticale (4) de l'aéronef (1) fonction de la localisation géographique de l'aéronef, ces moyens (33, 41) étant reliés aux moyens de localisation géographique (31, 42, 43) et à la base de données (32), l'altitude du plancher étant supérieure ou égale aux altitudes de sécurité autour de la verticale (4) de l'aéronef (1) ;
- des moyens de prédiction (34, 41) de la situation aérienne de l'aéronef reliés aux moyens de localisation (31) ;
- des moyens de comparaison (35, 41) de la situation aérienne prédite de l'aéronef (1) par rapport au plancher construit (3), ces moyens (35) étant reliés aux moyens de prédiction (34, 41) et aux moyens de construction (33, 41) ;
- des moyens (36) de calcul de trajectoires d'évitement, ces moyens (36) calculant une ou plusieurs trajectoires d'évitement (T1, T2, T3) en fonction des capacités de vol de l'aéronef (1) quand le résultat donné par les moyens de comparaison (35, 41) indique qu'une situation aérienne prédite de l'aéronef est en dessous du plancher (3, 301) ;
caractérisé par
- des moyens (37) de détermination du bilan d'énergie de chacune des trajectoires (T1, T2, T3) calculées.

2. Dispositif selon la revendication 1, caractérisé en ce que les moyens (37) de détermination du bilan d'énergie délivrent à des moyens d'alarme visuelle (44) la trajectoire (T2) de moindre énergie.

3. Dispositif selon l'une quelconque des revendications précédentes, caractérisé en ce que les moyens (37) de détermination du bilan d'énergie délivrent à des moyens d'alarme sonores (45) la trajectoire (T2) de moindre énergie.

4. Dispositif selon l'une quelconque des revendications précédentes, caractérisé en ce que les moyens de localisation (31) sont constitués d'un dispositif de navigation standard (42) associé à un récepteur de navigation satellite (43).

5. Dispositif selon l'une quelconque des revendications précédentes, caractérisé en ce que les moyens (33) de construction d'un plancher aérien, les moyens (34) de prédiction de la situation aérienne de l'aéronef, les moyens de comparaison (35), les moyens (36) de calcul de trajectoires d'évitement et les moyens (37) de détermination du bilan d'énergie sont contenus dans un calculateur (41).

6. Dispositif selon l'une quelconque des revendications précédentes, caractérisé en ce que le plancher (3) est calculé tout au long du vol de l'aéronef (1).

7. Dispositif selon l'une quelconque des revendications précédentes, caractérisé en ce que les moyens d'alarme visuels sont constitués d'un écran (51) produisant un symbole (52) représentant la position de l'aéronef, une flèche (53) indiquant la direction de la trajectoire à suivre pour éviter l'obstacle.

8. Dispositif selon la revendication 7, caractérisé en ce que l'obstacle est représenté sur l'écran (51).

9. Dispositif selon l'une quelconque des revendications 7 ou 8, caractérisé en ce qu'un message sur l'écran (51) indique la nature de l'obstacle.

## Patentansprüche

1. Vorrichtung, um Kollisionen für ein Flugzeug (1) zu vermeiden, die mindestens aufweist:
- Mittel (31, 42, 43) zur geographischen Ortung des Flugzeugs (1),
- eine Datenbank (32), die eine Beschreibung von Sicherheitshöhen enthält, die mindestens von den geographischen Orten abhängen,
- Mittel (33, 41) zur rechnerischen Konstruktion einer Flug-Untergrenze (3) um die vertikale Achse (4) des Flugzeugs (1) herum, die von der geographischen Lage des Flugzeugs abhängen und mit den Mitteln zur geographischen Ortung (31, 42, 43) und der Datenbank (32) verbunden sind, wobei die Höhe der Flug-Untergrenze mindestens den Sicherheitshöhen um die vertikale Achse des Flugzeugs (1) herum gleicht,
- Mittel (34, 41) zur Vorhersage der Flugsituation des Flugzeugs, die mit den Ortungsmitteln (31) verbunden sind,
- Mittel (35, 41) zum Vergleich der vorhergesagten Flugsituation des Flugzeugs (1) bezüglich der konstruierten Untergrenze (3), wobei diese Mittel (35) mit den Mitteln (34, 41) zur Vorhersage und den Mitteln (33, 41) zur rechnerischen Konstruktion einer Flug-Untergrenze verbunden sind,
- Mittel (36) zur Berechnung von Flugbahnen zur Vermeidung von Hindernissen, wobei diese Mittel (36) eine oder mehrere Flugbahnen (T1, T2, T3) abhängig von den Flugfähigkeiten des Flugzeugs (1) berechnen, wenn das durch die Vergleichsmittel (35, 41) gelieferte Ergebnis sagt, daß eine vorhergesagte Flugsituation des Flugzeugs unterhalb der Untergrenze (3, 301) liegen wird,
gekennzeichnet durch Mittel (37) zur Bestimmung der Energiebilanz jeder der berechneten Flugbahnen (T1, T2, T3).

2. Vorrichtung nach Anspruch 1, dadurch gekennzeichnet, daß die Mittel (37) zur Bestimmung der Energiebilanz an visuelle Alarmmittel (44) die Flugbahn (T2) mit dem geringsten Energieaufwand übermitteln.

3. Vorrichtung nach einem beliebigen der vorstehenden Ansprüche, dadurch gekennzeichnet, daß die Mittel (37) zur Bestimmung der Energiebilanz an akustische Alarmmittel (45) die Flugbahn (T2) mit dem geringsten Energieaufwand übermitteln.

4. Vorrichtung nach einem beliebigen der vorstehenden Ansprüche, dadurch gekennzeichnet, daß die Ortungsmittel (31) von einer üblichen Navigationsvorrichtung (42) in Verbindung mit einem Satelliten-Navigationsempfänger (43) gebildet werden.

5. Vorrichtung nach einem beliebigen der vorstehenden Ansprüche, dadurch gekennzeichnet, daß die Mittel (33) zur rechnerischen Konstruktion einer Flug-Untergrenze, die Mittel (34) zur Vorhersage der Flugsituation des Flugzeugs, die Vergleichsmittel (35), die Mittel (36) zur Berechnung von Ausweich-Flugbahnen und die Mittel (37) zur Bestimmung der Energiebilanz in einem Rechner (41) enthalten sind.

6. Vorrichtung nach einem beliebigen der vorstehenden Ansprüche, dadurch gekennzeichnet, daß die Flug-Untergrenze (3) während des ganzen Flugs des Flugzeugs (1) berechnet wird.

7. Vorrichtung nach einem beliebigen der vorstehenden Ansprüche, dadurch gekennzeichnet, daß die visuellen Alarmmittel von einem Bildschirm (51) gebildet werden, der ein Symbol (52) zur Markierung der Lage des Flugzeugs und einen Pfeil (53) anzeigt, der die Richtung der zu verfolgenden Flugbahn angibt, um dem Hindernis auszuweichen.

8. Vorrichtung nach Anspruch 7, dadurch gekennzeichnet, daß das Hindernis auf dem Bildschirm (51) angezeigt wird.

9. Vorrichtung nach einem beliebigen der Ansprüche 7 und 8, dadurch gekennzeichnet, daß eine Nachricht auf dem Bildschirm (51) die Art des Hindernisses angibt.

## Claims

1. Collision avoidance device for an aircraft (1) comprising at least:
- means (31, 42, 43) of geographical location of the aircraft (1);
- a database (32) containing a description of safety altitudes which depend at least on the geographical places;
- means (33, 41) of construction by calculation of a floor (3) about the vertical (4) of the aircraft (1) which depends on the geographical location of the aircraft, these means (33, 41) being linked to the means of geographical location (31, 42, 43) and to the database (32), the altitude of the floor being greater than or equal to the safety altitudes about the vertical (4) of the aircraft (1);
- means (34, 41) for predicting the aerial situation of the aircraft and which are linked to the means of location (31);
- means (35, 41) of comparison of the predicted aerial situation of the aircraft (1) with respect to the constructed floor (3), these means (35) being linked to the means of prediction (34, 41) and to the means of construction (33, 41);
- means (36) of calculation of avoidance paths, these means (36) computing one or more avoidance paths (T1, T2, T3) as a function of the flight capabilities of the aircraft (1) when the result given by the means of comparison (35, 41) indicates that a predicted aerial situation of the aircraft is below the floor (3, 301); characterized by
- means (37) for determining the energy balance of each of the computed paths (T1, T2, T3).

2. Device according to Claim 1, characterized in that the means (37) for determining the energy balance deliver the path (T2) of least energy to visual alarm means (44).

3. Device according to any one of the preceding claims, characterized in that the means (37) for determining the energy balance deliver the path (T2) of least energy to audible alarm means (45).

4. Device according to any one of the preceding claims, characterized in that the means of location (31) consist of a standard navigation device (42) associated with a satellite navigation receiver (43).

5. Device according to any one of the preceding claims, characterized in that the means (33) of construction of an aerial floor, the means (34) of prediction of the aerial situation of the aircraft, the means of comparison (35), the means (36) of computing avoidance paths and the means (37) for determining the energy balance are contained in a computer (41).

6. Device according to any one of the preceding claims, characterized in that the floor (3) is computed throughout the flight of the aircraft (1).

7. Device according to any one of the preceding claims, characterized in that the visual alarm means consist of a screen (51) producing a symbol (52) representing the position of the aircraft, an arrow (53) indicating the direction of the path to be followed in order to avoid the obstacle.

8. Device according to Claim 7, characterized in that the obstacle is represented on the screen (51).

9. Device according to either one of Claims 7 or 8, characterized in that a message on the screen (51) indicates the nature of the obstacle.
